# EUROPÄISCHE PATENTSCHRIFT

(11) **EP 2 187 789 B1**
(45) Veröffentlichungstag und Bekanntmachung des Hinweises auf die Patenterteilung: **30.11.2011**
(21) Anmeldenummer: 08801612.6
(22) Anmeldetag: 18.08.2008
(51) Int. Cl.: A47J 31/06

(54) **SYSTEM MIT EINER BRÜHMASCHINE UND EINEM PORTIONSPACKUNGSHALTER**
SYSTEM COMPRISING A BREWING MACHINE AND A PORTION PACK HOLDER
SYSTÈME COMPRENANT UNE MACHINE D'INFUSION ET UN SUPPORT DE DOSES

(30) Priorität: 16.08.2007 DE 102007038699
(43) Veröffentlichungstag der Anmeldung: 26.05.2010
(73) Patentinhaber: Tchibo GmbH, 22297 Hamburg (DE)
(72) Erfinder: TERNITÉ, Rüdiger, 21149 Hamburg (DE); MEYER-Ruhstrat, Hartwig, 21435 Stelle (DE); BALKAU, Werner, CH-8762 Schwändi (CH)
(74) Vertreter: UEXKÜLL & STOLBERG
(86) Internationale Anmeldenummer: PCT/EP2008/006783
(87) Internationale Veröffentlichungsnummer: WO 2009/021756

(56) Entgegenhaltungen:
- EP-A- 1 582 127
- WO-A-2006/053635

## Beschreibung

Die Erfindung betrifft ein System mit einer Brühmaschine und einem Portionspackungshalter sowie optional zusätzlich einer Portionspackung.

Aus der WO 2006/053635 A1 ist ein System mit einer Brühmaschine und einer Portionskapsel bekannt. Die Brühmaschine ist zum Brühen eines heißen Getränks, insbesondere eines Kaffeegetränks, mittels einer Portionskapsel mit einem Kapseldeckel und einem Kapselboden eingerichtet und weist eine Druckwassereinrichtung, einen Portionskapselhalter und eine Steuerung auf. Dem Portionskapselhalter sind zwei relativ zueinander bewegbare Aufstechmittel zugeordnet, die beim oder nach dem Einsetzen der Portionskapsel in den Portionskapselhalter den Kapseldeckel sowie den Kapselboden durchstoßen, so dass heißes Wasser durch den Kapseldeckel in den Innenraum der Portionskapsel und Getränk durch den Kapselboden aus der Portionskapsel gelangen kann. Der Portionskapselhalter lässt sich in eine Führungseinrichtung einsetzen und kann damit auf das dem Kapseldeckel zugeordnete Aufstechmittel zu bewegt werden. Die Steuerung ist zum Bereitstellen mindestens drei verschiedener Drücke für das Druckwasser eingerichtet, z.B. zum Brühen von Espresso, Caffè Crema und Filterkaffee. Die Brühmaschine dieses vorbekannten Systems ist auf die Verwendung mit Portionskapseln der erläuterten Art abgestimmt.

Weit verbreitet sind Portionspackungen, die eine partikelförmige, mittels Wasser extrahierbare Getränkesubstanz enthalten, insbesondere eine Kaffeesubstanz, und bei denen die Getränkesubstanz allseitig von einem Filtermaterial umgeben ist, in der Regel von einem Filterpapier. Andere Filtermaterialien, wie Vlies, Kunststoff- oder Textilgewebe, Metall, usw., sind ebenfalls denkbar. Derartige Portionspackungen werden auch als Pads, Pods, Kaffeepads oder Filterpads bezeichnet. Zum Brühen dienen speziell darauf abgestimmte Brühmaschinen, wie z.B. in der EP 0 904 717 A1 beschrieben. Im Vergleich zu den zuvor erwähnten Portionskapseln haben Kaffeepads den Nachteil, dass sie nicht aromadicht sind; trotzdem werden sie häufig benutzt.

EP 1 582 127 A1 offenbart eine Vorrichtung zum Anpassen einer Espressomaschine, die an sich für die Verwendung mit losem Mahlkaffee gedacht ist, an die Anwendung mit in einem Filterpad enthaltenem Mahlkaffee. Dabei füllt das Filterpad einen Kaffeehalter, der normalerweise den losen Mahlkaffee trägt, im Randbereich nicht voll aus. Um zu verhindern, dass beim Brühvorgang Druckwasser um das Filterpad herum fließt, ohne dabei Kaffee zu extrahieren, wird von oben ein ringförmiges Element in den Kaffeehalter eingesetzt, das über dem Filterpad zu liegen kommt und nur dessen Zentralbereich freilässt, den Randbereich des Kaffeehalters dagegen abschließt.

Es ist Aufgabe der Erfindung, eine Möglichkeit zu schaffen, um Portionspackungen in Form von Pads oder Kaffeepads auch mit einer Brühmaschine der eingangs erläuterten Art zu verwenden, die an sich für die ausschließliche Nutzung mit mehr oder weniger festen Portionskapseln konstruiert ist.

Diese Aufgabe wird gelöst durch ein System mit einer Brühmaschine und einem Portionspackungshalter mit den Merkmalen des Anspruchs 1. Das System gemäß Anspruch 2 enthält zusätzlich eine padartige Portionspackung. Vorteilhafte Ausgestaltungen der Erfindung ergeben sich aus den Unteransprüchen.

Die Brühmaschine des erfindungsgemäßen Systems ist zum Brühen eines Getränks, insbesondere eines heißen Kaffeegetränks, mittels einer Portionspackung eingerichtet, welche eine partikelförmige, mittels Wasser extrahierbare Getränkesubstanz enthält. Die Brühmaschine weist eine Druckwassereinrichtung, eine Führungseinrichtung für einen Portionspackungshalter und eine Steuerung auf. Die Steuerung ist zum Bereitstellen mindestens drei verschiedener Drücke für das Druckwasser eingerichtet. Ein in die Führungseinrichtung eingesetzter Portionspackungshalter kann mittels der Führungseinrichtung nach oben auf ein Aufstechmittel zu bewegt werden. Wenn die Brühmaschine mit einer Portionskapsel mit einem Kapseldeckel und einem Kapselboden verwendet wird, dient dieses Aufstechmittel dazu, den Kapseldeckel anzustechen, so dass Druckwasser in das Innere der Portionskapsel gelangen kann.

Eine weitere Komponente des erfindungsgemäßen Systems ist ein Portionspackungshalter, der in die Führungseinrichtung einsetzbar ist und eine Aufnahme aufweist, in die mindestens eine Portionspackung einlegbar ist. Unterhalb der Aufnahme befindet sich ein Auslass, durch den gebrühtes Getränk den Portionspackungshalter verlassen kann, nachdem von der Druckwassereinrichtung abgegebenes Wasser durch eine in den Portionspackungshalter eingelegte Portionspackung hindurchgetreten ist.

Erfindungsgemäß weist der Portionspackungshalter eine Schutzeinrichtung auf, die dazu eingerichtet ist, eine in die Aufnahme eingelegte Portionspackung vor dem Aufstechmittel zu schützen. Bei dem erfindungsgemäßen System wird die Portionspackung also gerade nicht von dem Aufstechmittel perforiert, sondern es ist eine Schutzeinrichtung vorgesehen, die dies verhindern soll. Dadurch wird die Möglichkeit eröffnet, eine Portionspackung zu verwenden, die eine partikelförmige, mittels Wasser extrahierbare Getränkesubstanz enthält (z.B. eine Kaffeesubstanz), die allseitig von einem Filtermaterial umgeben ist (z.B. von einem Filterpapier). Bei einer vorteilhaften Ausgestaltung hat die Portionspackung die Form eines herkömmlichen Pads, bei dem zwei runde Filterpapierscheiben aufeinandergelegt und am Rand miteinander verbunden oder versiegelt sind. In dem Zwischenraum zwischen den beiden Filterpapierscheiben befindet sich z.B. Mahlkaffee.

Nachdem eine derartige Portionspackung in die Aufnahme des Portionspackungshalters eingelegt ist, sorgt die Schutzeinrichtung dafür, dass das Aufstechmittel bei der Verwendung der Brühmaschine die Portionspackung nicht beschädigen kann. Dies wäre nämlich höchst unerwünscht, da beim Brühvorgang durch die beschädigte Stelle z.B. Kaffeesubstanz aus der Portionspackung austreten würde und nicht nur die Umgebung verschmutzen, sondern auch ungefiltert durch den Auslass austreten und in das Getränk gelangen könnte.

Mittels eines speziell gestalteten Portionspackungshalters ermöglicht es also das erfindungsgemäße System, die vorbekannte Brühmaschine, die an sich für die Benutzung von Portionskapseln mit einem Kapseldeckel und einem Kapselboden konstruiert ist, auch mit Portionspackungen in Form von Kaffeepads zu verwenden.

Es ist vorteilhaft, wenn der Portionspackungshalter mehrere Portionspackungen aufnehmen kann (insbesondere zwei übereinander gelegte Pads), so dass man z.B. zum Brühen einer normalen Tasse Kaffee eine Portionspackung mit Kaffee und zum Brühen einer Doppeltasse zwei Portionspackungen mit Kaffee verwenden kann.

Eine Möglichkeit für eine Schutzeinrichtung besteht darin, die Aufnahme für die Portionspackung relativ tief zu gestalten. Das heißt, die Tiefe der Aufnahme ist derart bemessen, dass eine in die Aufnahme eingelegte Portionspackung während eines Brühvorgangs auch in einem aufgeblähten Zustand nicht an das Aufstechmittel heranreicht. Sogar zwei übereinandergelegte Pads können so zur gleichzeitigen Herstellung von zwei Getränken genutzt werden, ohne dass das oben liegende Pad durch das Aufstechmittel verletzt wird. Hierzu kann die Aufnahme z.B. als relative tiefe, becherförmige Mulde gestaltet sein.

Bei einer anderen Möglichkeit weist die Schutzeinrichtung eine mit mindestens einer Wasserdurchtrittsöffnung versehene Abdeckung auf, die dazu eingerichtet ist, eine (bzw. die oberste) in die Aufnahme des Portionspackungshalters eingelegte Portionspackung nach oben abzudecken. Die Abdeckung dient als Schutz vor dem Aufstechmittel und verhindert, dass das Aufstechmittel die Portionspackung perforiert, z.B. wenn der Portionspackungshalter mittels der Führungseinrichtung nach oben auf das Aufstechmittel zu bewegt wird oder während des Brühvorgangs. Insbesondere verhindert die Abdeckung, dass sich die Portionspackung beim Brühvorgang so weit nach oben aufblähen kann, dass sie in Kontakt mit dem Aufstechmittel kommt. Die Abdeckung kann nach unten gewölbt sein, um mit der Wölbung einen Raum zu schaffen, in den das nach unten vorstehende Aufstechmittel hineinragt.

Die Abdeckung kann z.B. als Klappdeckel an den Portionspackungshalter angelenkt sein. Bei einer bevorzugten Ausführungsform ist die Abdeckung als separater Deckel gestaltet, der bei aus der Führungseinrichtung herausgenommenem Portionspackungshalter von oben auf die Aufnahme aufsetzbar ist. Die Aufnahme kann von einem Auflagerand umgeben sein, auf den der Deckel in einen Randbereich auflegbar ist. Es ist vorteilhaft, wenn zwischen dem Auflagerand und dem Randbereich des Deckels eine Dichtung vorgesehen ist.

Bei bevorzugten Ausführungsformen weist die Abdeckung mehrere wasserdurchtrittsöffnungen auf, deren Anordnung für eine gleichmäßige Wasserverteilung zu einer unter der Abdeckung befindlichen Portionspackung eingerichtet ist. Dadurch wird erreicht, dass sich während des Brühvorgangs das von der Druckwassereinrichtung abgegebene Wasser gleichmäßig über die Portionspackung verteilt, was zu einer hohen Qualität des gebrühten Getränks führt.

Ferner kann der untere Bereich der Aufnahme mit Sieböffnungen versehen sein, die z.B. in einem herausnehmbaren Siebeinsatz angeordnet sein können. Wenn die Wasserdurchtrittsöffnungen und die Sieböffnungen klein genug sind, sind sie dazu geeignet, auch direkt in die Aufnahme eingefüllten Mahlkaffee zurückzuhalten. In diesem Fall lässt sich das erfindungsgemäße system sogar mit gewöhnlichem Mahlkaffee verwenden, der direkt in die Aufnahme des Portionspackungshalters eingefüllt werden kann. Die Benutzung von Pads mit Filtermaterial ist hierbei also nicht erforderlich.

Im Bereich des Auslasses des Portionspackungshalters kann eine Cremadüse angeordnet sein. Die Cremadüse bewirkt, dass das hindurchtretende gebrühte Getränk aufschäumt, wie es z.B. bei Caffè Crema oder Espresso erwünscht ist.

Wie bereits erwähnt, kann bei dem erfindungsgemäßen System die Brühmaschine genauso konstruiert sein wie in der WO 2006/053635 A1 beschrieben. Der Offenbarungsgehalt dieser Schrift wird in die vorliegende Anmeldung mit aufgenommen. Der einzige Unterschied besteht im Portionspackungshalter. Während der Portionspackungshalter gemäß WO 2006/053635 A1 ein Portionskapselhalter für Portionskapseln mit einem Kapseldeckel und einem Kapselboden ist, der sogar mit einem Aufstechmittel für den Kapselboden versehen ist, hat der Portionspackungshalter des erfindungsgemäßen Systems eine Schutzeinrichtung, die gewährleistet, dass eine eingelegte Portionspackung (z.B. ein Kaffeepad) bei der Benutzung nicht beschädigt wird. Da der Portionspackungshalter ein von der übrigen Brühmaschine separates Teil ist, lässt er sich problemlos an Stelle des Portionskapselhalters des vorbekannten Systems verwenden.

Die Brühmaschine des erfindungsgemäßen Systems kann ebenso wie die vorbekannte Brühmaschine eine Anlagefläche aufweisen, relativ zu der der Portionspackungshalter mittels der Führungseinrichtung bewegbar ist und von der das Aufstechmittel nach unten vorsteht. Wenn im Bereich der Anlagefläche eine umlaufende Dichtung vorgesehen ist, wie auch bei der vorbekannten Brühmaschine, die bei eingesetztem Portionspackungshalter an einen Randbereich des Portionspackungshalters anlegbar ist (z.B. an der Oberseite des Deckels), baut sich während des Brühvorgangs in der Aufnahme des Portionspackungshalters der Druck des Druckwassers in dynamischer Weise auf. Dabei sollte auch für die Unterseite des Deckels eine Dichtung vorgesehen sein, wie bereits erwähnt. Wie groß der Druck während des Brühvorgangs wird, hängt von dem über die Steuerung eingestellten Druck für das Druckwasser und vom Strömungswiderstand innerhalb der Portionspackung und am Auslass des Portionspakkungshalters ab.

Bei bevorzugten Ausführungsformen ist die Steuerung zum Bereitstellen von drei Drücken für das Druckwasser eingerichtet, die zum Brühen von Espresso (z.B. 8 bis 18 bar), Caffè Crema (z.B. 4 bis 10 bar) sowie Filterkaffee (z.B. 1 bis 4) vorgesehen sind.

Die Portionspackungen können optimal auf das jeweilige Getränk abgestimmt sein, was nicht nur über die Auswahl der Kaffeesubstanz (zum Brühen von Espresso, Caffe Crema oder Filterkaffee) erfolgen kann, sondern z.B. auch durch die Auswahl des Filtermaterials der Portionspackung. Außer einer Kaffeesubstanz können optional weitere Substanzen in der Portionspackung enthalten sein, z.B. Zucker und/oder Milchpulver. Auch ist es denkbar, anstelle von Kaffeesubstanzen andere Getränkesubstanzen zu verwenden, wie z.B. Tee, Schokolade oder Instantsuppen. Mischungen von Getränkesubstanzen sind ebenfalls möglich.

Im Folgenden wird die Erfindung anhand eines Ausführungsbeispiels weiter beschrieben. Die Zeichnungen zeigen in
- Figur 1: eine Explosionsansicht einer Ausführungsform eines Portionspackungshalters aus einem erfindungsgemäßen System mit einer Brühmaschine und einem Portionspackungshalter,
- Figur 2: eine dreidimensionale Ansicht des Portionspackungshalters aus Figur 1 im zusammengesetzten Zustand,
- Figur 3: einen Längsschnitt durch den Portionspackungshalter in der in Figur 4 mit III-III gekennzeichneten Ebene,
- Figur 4 eine: Vorderansicht des Portionspackungshalters gemäß Figur 3, wobei auch Teile der Brühmaschine sichtbar sind,
- Figur 5: eine Vorderansicht des Portionspackungshalters und von Teilen der Brühmaschine, nachdem der Portionspackungshalter in eine Führungseinrichtung eingesetzt und auf einen Aufstechdorn der Brühmaschine zu bewegt worden ist, und
- Figur 6: einen Längsschnitt in der in Figur 5 mit VI-VI gekennzeichneten Ebene.

Bei der im Folgenden beschriebenen Ausführungsform eines Systems mit einer Brühmaschine und einem Portionspackungshalter ist die Brühmaschine so konstruiert, wie in der WO 2006/053635 A1 beschrieben. Gemäß WO 2006/053635 A1 wird die Brühmaschine mit einem Portionskapselhalter benutzt, der zum Aufnehmen einer relativ festen Portionskapsel mit einem Kapseldeckel und einem Kapselboden konzipiert ist. Wenn dieser Portionskapselhalter mit Hilfe einer bewegbaren Halteeinrichtung (Führungseinrichtung) auf einen nach unten von der Brühmaschine vorragenden Aufstechdorn zu bewegt wird, wird der Kapseldeckel perforiert, um den Zutritt von Brühwasser für das zuzubereitende Getränk zu ermöglichen. Bereits vorher oder während des Brühvorgangs wird auch der Kapselboden durch ein an dem vorbekannten Portionskapselhalter angeordnetes Aufstechmittel angestochen, um das Getränk aus der Portionskapsel herauszulassen.

Wenn die vorbekannte Brühmaschine nicht mit dem mitgelieferten Portionskapselhalter benutzt wird, sondern mit dem im Folgenden beschriebenen Portionspackungshalter 1, können auch handelsübliche Pads (Kaffeepads, Filterpads) verwendet werden.

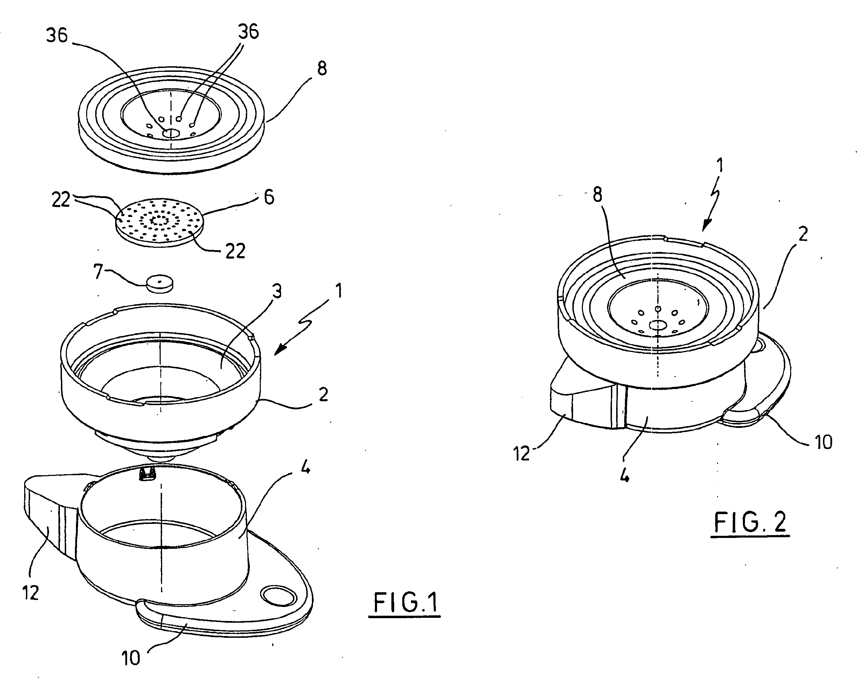

In Figur 1 ist der Portionspackungshalter 1 in Explosionsansicht dargestellt. Der Portionspackungshalter 1 weist ein Oberteil 2 mit einer als muldenartige Vertiefung gestalteten Aufnahme 3 und ein Unterteil 4 auf. Im Ausführungsbeispiel sind das Oberteil 2 und das Unterteil 4 als Spritzteile aus Kunststoff hergestellt und miteinander verrastet.

Im unteren Bereich der Aufnahme 3 ist ein Siebeinsatz 6 angeordnet. Darunter befindet sich eine Cremadüse 7. Im Ausführungsbeispiel ist die Cremadüse 7 aus Metall gefertigt und in dem Oberteil 2 festgeklemmt. Um eine gründliche Reinigung zu ermöglichen, können bei einer anderen Ausführungsform der Siebeinsatz und die Cremadüse herausnehmbar ausgeführt sein. Ein weiteres Bauteil des Portionspackungshalters 1 ist ein separater Deckel 8, der in seinem mittleren Bereich nach unten gewölbt ist.

Das Unterteil 4 ist mit einem Griff 10 sowie einem Vorsprung 12 versehen, der eine vorbestimmte Ausrichtung des Portionspackungshalters 1 in einer Führungseinrichtung der Brühmaschine gewährleistet.

Die Figur 2 zeigt den Portionspackungshalter 1 im zusammengesetzten Zustand mit aufgelegtem Deckel 8.

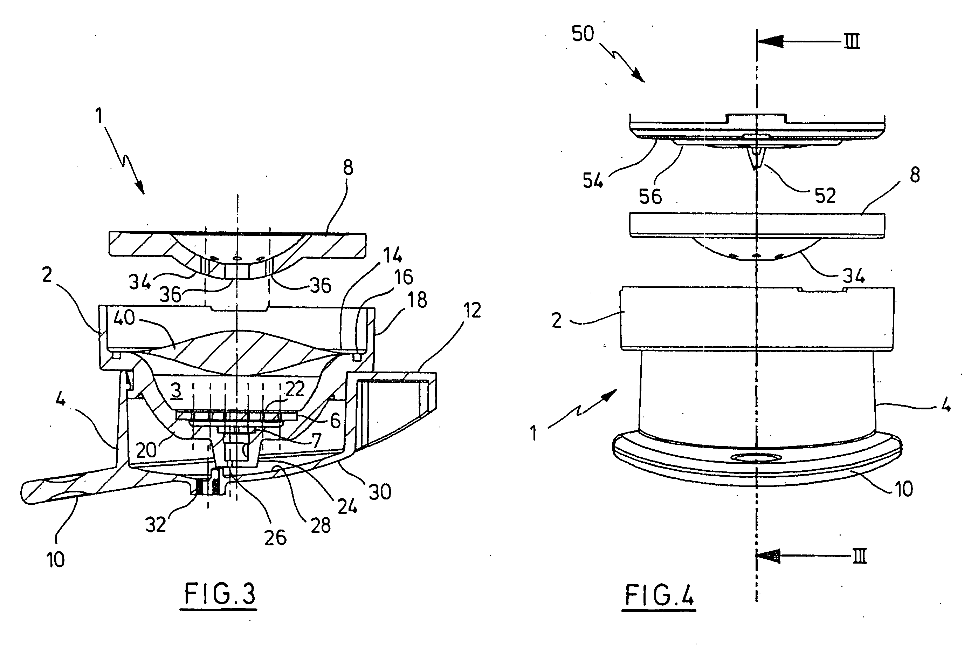

In der Längsschnittansicht gemäß Figur 3 sind weitere Einzelheiten des Portionspackungshalters 1 zu erkennen. Der Deckel 8 ist in dieser Darstellung angehoben.

Die muldenartige Aufnahme 3 ist an ihrem oberen Ende von einem Auflagerand 14 umgeben, in den eine umlaufende Dichtung 16 eingelassen ist. Den seitlichen Abfluss bildet ein umlaufender Seitenrand 18.

Der Siebeinsatz 6 ist in eine Aussparung im Bodenbereich 20 der Aufnahme 3 eingelegt. Eine Anzahl von Sieböffnungen 22 sorgt dafür, dass gebrühtes Getränk großflächig und gleichmäßig abgeleitet werden kann. Die Cremadüse 7, die im Ausführungsbeispiel nur mit einer einzigen Öffnung versehen ist, befindet sich in einer weiteren Aussparung unterhalb des Siebeinsatzes 6. Nachdem gebrühtes Getränk durch die Sieböffnungen 22 und die Cremadüse 7 hindurchgetreten ist, strömt es durch einen Auslassvorsprung 24 und eine an dessen unterem Ende angeordnete Öffnung 26 auf eine Prallfläche 28, die sich an der Oberseite eines Bodens 30 des Unterteils 4 befindet. Von dort gelangt das Getränk zu einer (oder mehreren) Auslassöffnungen 32 mit einem sich nach unten erstreckenden Tropfvorsprung.

Die Cremadüse 7, die Öffnung 26, die Prallfläche 28 und die in Bezug auf die Öffnung 26 axial versetzte Auslassöffnung 32 bewirken, dass bei unter Druck gebrühtem Kaffee eine Schaumschicht (Crema) entsteht. Falls keine Creme erwünscht ist, wie z.B. für Filterkaffee, wird die Brühmaschine bei niedrigerem Druck betrieben.

Der Deckel 8 hat, wie bereits erwähnt, einen nach unten gewölbten Bereich 34, über den eine Anzahl von Wasserdurchtrittsöffnungen 36 verteilt ist. Eine der Wasserdurchtrittsöffnungen 36 ist im Ausführungsbeispiel als relativ gro-βe zentrale Öffnung gestaltet. Die Wasserdurchtrittsöffnungen 36 bewirken, dass von oben auf den Deckel 8 auftreffendes Brühwasser relativ gleichmäßig über die Querschnittsfläche der Aufnahme 3 verteilt wird.

In Figur 3 ist ein Pad 40 eingezeichnet, das sich im oberen Bereich der Aufnahme 3 befindet. Das Pad 40 ist ein übliches Kaffeepad. Im Ausführungsbeispiel weist das Pad 40 zwei übereinander angeordnete kreisrunde Filterpapierlagen auf, die an ihrem Rand miteinander verbunden sind. Zwischen den beiden Filterpapierlagen befindet sich im Ausführungsbeispiel Mahlkaffee. Die Kaffeesorte kann auf die Art des zu brühenden Getränks (z.B. Filterkaffee, Caffè Crema, Espresso) abgestimmt sein. Zusätzlich oder alternativ können sich auch andere Substanzen in dem Pad 40 befinden, z.B. Zucker oder Milchpulver.

Wenn der Deckel 8 auf das Oberteil 2 aufgesetzt wird, drückt der gewölbte Bereich 34 das Pad 40 nach unten. Die Dichtung 16 liegt dann an der Unterseite des Deckels 8 an.

Wenn die Sieböffnungen 22 und vorzugsweise auch die Wasserdurchtrittsöffnungen 36 so klein sind, dass die Teilchen von Mahlkaffee dort nicht oder nur zu einem geringfügigen Anteil hindurchtreten können, lässt sich in den Portionspackungshalter 1 z.B. auch direkt Mahlkaffee einfüllen. Denn in diesem Fall wird das Filterpapier eines Pads 40 nicht benötigt.

Nun wird mit Hilfe der Figuren 4 bis 6 die Funktionsweise des Systems erläutert.

Nachdem ein Pad 40 in die Aufnahme 3 eingelegt und der Deckel 8 aufgesetzt worden ist, wird der Portionspackungshalter 1 an die Brühmaschine 50 herangeführt. In Figur 4 ist ein in diesem Zusammenhang wichtiges Bauteil der Brühmaschine 50 zu erkennen, nämlich ein Aufstechdorn 52, der von einer Anlagefläche 54 nach unten vorspringt. Der Aufstechdorn 52 ist in einigem Abstand von einer ringförmigen Dichtung 56 umgeben. Der Aufstechdorn 52 dient dazu, die Oberseite einer Portionskapsel zu perforieren, wenn die Brühmaschine 50 in der in der WO 2006/053635 A1 beschriebenen Weise betrieben wird. (Als Aufstechmittel lassen sich z.B. auch mehrere Spitzen (mit oder ohne Zuleitungskanälen für das Druckwasser) verwenden.)

Bei dem vorliegenden System muss dagegen verhindert werden, dass der Aufstechdorn 52 das Pad 40 beschädigt, denn andernfalls würde z.B. Mahlkaffee aus dem Pad 40 austreten, den Portionspackungshalter 1 verschmutzen und je nach Größe der Sieböffnungen 22 sogar in das gebrühte Getränk gelangen können. Zum Schutz dient der Deckel 8.

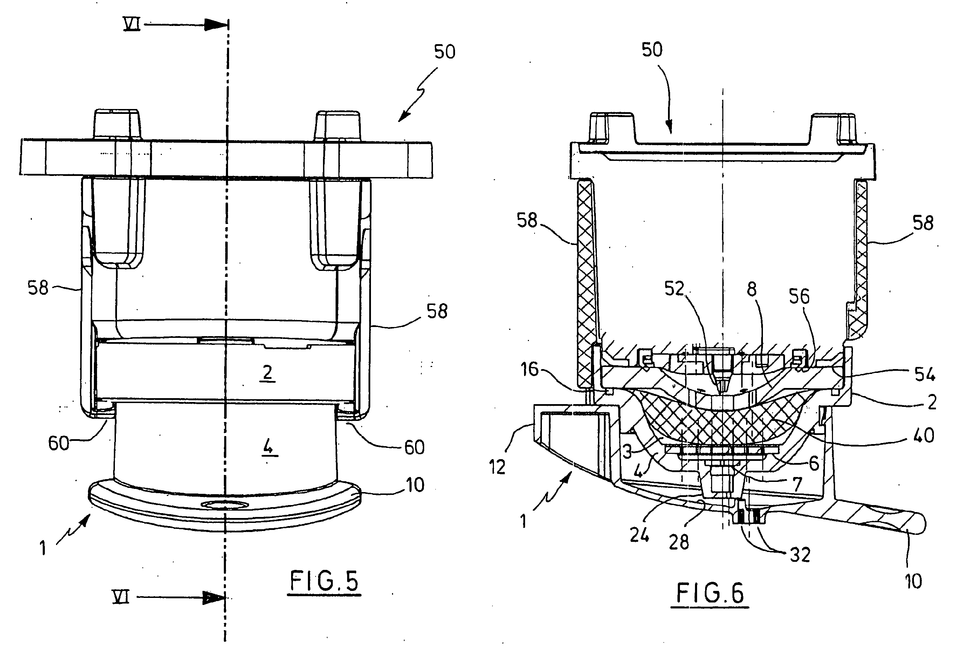

Wenn dass Getränk gebrüht werden soll, wird der Portionspackungshalter 1 mit eingelegtem Pad 40 und aufgesetztem Dekkel 8 in eine Führungseinrichtung 58 der Brühmaschine 50 eingesetzt. Dabei ruht der untere Rand des Oberteils 2 auf einem Auflagevorsprung 60. In Figur 5 sind ein Teil der Führungseinrichtung 58 und der Auflagevorsprung 60 zu erkennen. Wenn ein in den Figuren nicht eingezeichneter Schwenkhebel der Brühmaschine 50 betätigt wird, bewegt sich die Führungseinrichtung 58 mit dem Portionspackungshalter 1 nach oben, bis die Oberseite des Deckels 8 an der Anlagefläche 54 der Brühmaschine 50 anschlägt. Dieser Zustand ist in Figur 5 in Vorderansicht und in Figur 6 im Längsschnitt gezeigt.

Wie in Figur 6 zu erkennen ist, drückt der Deckel 8 das Pad 40 nach unten in die Aufnahme 3 hinein. Der gewölbte Bereich 34 des Deckels 8 nimmt den Aufstechdorn 52 auf. Die Dichtung 56 und die Dichtung 16 gewährleisten, dass sich während des Brühvorgangs in der Aufnahme 3 ein Druck aufbauen kann. Die Höhe des Drucks hängt von der Brühmaschine 50 und von den Strömungswiderständen im Bereich des Portionspackungshalters 1 ab, die im Wesentlichen durch das Pad 40 und den Auslass (Cremadüse 7 und Öffnung 26) bestimmt werden.

Ansonsten kann der Brühvorgang so ablaufen, wie in der WO 2006/053635 A1 beschrieben. Insbesondere können dabei mehrere verschiedene Brühdrücke verwendet werden, z.B. um Filterkaffee, Caffè Crema oder Espresso aufzubrühen.

Nach Beendigung des Brühvorgangs wird der Schwenkhebel der Führungseinrichtung in der entgegengesetzten Richtung betätigt, um den Portionspackungshalter nach unten zu verfahren. Danach kann der Portionspackungshalter aus der Führungseinrichtung nach vorne herausgezogen werden. Nach Abheben des Deckels 8 lässt sich das verbrauchte Pad 40 entsorgen.

## Patentansprüche

1. System mit
- einer Brühmaschine (50),
die zum Brühen eines Getränks, insbesondere eines heißen Kaffeegetränks, mittels einer Portionspackung (40) eingerichtet ist, welche eine partikelförmige, mittels Wasser extrahierbare Getränkesubstanz enthält,
die eine Druckwassereinrichtung, eine Führungseinrichtung (58) für einen Portionspackungshalter (1) und eine Steuerung aufweist,
wobei die Steuerung zum Bereitstellen mindestens drei verschiedener Drücke für das Druckwasser eingerichtet ist und
wobei ein in die Führungseinrichtung (58) eingesetzter Portionspackungshalter (1) mittels der Führungseinrichtung (58) nach oben auf ein Aufstechmittel (52) zu bewegbar ist, und
- einem Portionspackungshalter (1),
der in die Führungseinrichtung (58) einsetzbar ist, der eine Aufnahme (3) aufweist, in die mindestens eine Portionspackung (40) einlegbar ist, und
der unterhalb der Aufnahme (3) einen Auslass (24, 26, 32) aufweist, durch den gebrühtes Getränk den Portionspackungshalter (1) verlassen kann, nachdem von der Druckwassereinrichtung abgegebenes Wasser durch eine in den Portionspackungshalter (1) eingelegte Portionspackung (40) hindurchgetreten ist,
- **gekennzeichnet durch**
eine Schutzeinrichtung (8), die dazu eingerichtet ist, eine in die Aufnahme (3) eingelegte Portionspackung (40) vor dem Aufstechmittel (52) zu schützen,
wobei die Schutzeinrichtung
entweder **durch** die Tiefe der Aufnahme ausgebildet ist und die Tiefe der Aufnahme derart bemessen ist, dass eine in die Aufnahme eingelegte Portionspackung (40) während eines Brühvorgangs auch in einem aufgeblähten Zustand nicht an das Aufstechmittel (52) heranreicht,
oder eine mit mindestens einer Wasserdurchtrittsöffnung (36) versehene Abdeckung (8) aufweist, die dazu eingerichtet ist, eine in die Aufnahme (3) des Portionspackungshalters (1) eingelegte Portionspackung (40) nach oben abzudecken.

2. System nach Anspruch 1, **gekennzeichnet durch** eine Portionspackung (40), die eine partikelförmige, mittels Wasser extrahierbare Getränkesubstanz, vorzugsweise eine Kaffeesubstanz, enthält, wobei die Getränkesubstanz allseitig von einem Filtermaterial umgeben ist, vorzugsweise von einem Filterpapier, und wobei die Portionspackung (40) in die Aufnahme (3) des Portionspackungshalters (1) einlegbar ist.

3. System nach Anspruch 1 oder 2, **dadurch gekennzeichnet, dass** die Schutzeinrichtung die mit mindestens einer Wasserdurchtrittsöffnung (36) versehene Abdeckung (8) aufweist und die Abdeckung (8) nach unten gewölbt ist.

4. System nach einem der Ansprüche 1 bis 3, **dadurch gekennzeichnet, dass** die Schutzeinrichtung die mit mindestens einer Wasserdurchtrittsöffnung (36) versehene Abdeckung (8) aufweist und die Abdeckung als separater Deckel (8) gestaltet ist, der bei aus der Führungseinrichtung (58) herausgenommenem Portionspackungshalter (1) von oben auf die Aufnahme (3) aufsetzbar ist.

5. System nach Anspruch 4, **dadurch gekennzeichnet, dass** die Aufnahme (3) von einem Auflagerand (14) umgeben ist, auf den der Deckel (8) in einem Randbereich auflegbar ist.

6. System nach Anspruch 5, **dadurch gekennzeichnet, dass** zwischen dem Auflagerand (14) und dem Randbereich des Deckels (8) eine Dichtung (16) vorgesehen ist.

7. System nach einem der Ansprüche 1 bis 6, **dadurch gekennzeichnet, dass** die Schutzeinrichtung die mit mindestens einer Wasserdurchtrittsöffnung (36) versehene Abdeckung (8) aufweist und die Abdeckung (8) mehrere Wasserdurchtrittsöffnungen (36) aufweist, deren Anordnung für eine gleichmäßige Wasserverteilung zu einer unter der Abdeckung (8) befindlichen Portionspackung (40) eingerichtet ist.

8. System nach einem der Ansprüche 1 bis 7, **dadurch gekennzeichnet, dass** die Schutzeinrichtung die mit mindestens einer. Wasserdurchtrittsöffnung (36) versehene Abdeckung (8) aufweist und der untere Bereich der Aufnahme (3) mit Sieböffnungen (22) versehen ist, die vorzugsweise in einem herausnehmbaren Siebeinsatz (6) angeordnet sind.

9. System nach Anspruch 7 und Anspruch 8, **dadurch gekennzeichnet, dass** die Wasserdurchtrittsöffnungen (36) und die Sieböffnungen (22) dazu eingerichtet sind, direkt in die Aufnahme (3) eingefüllten Mahlkaffee zurückzuhalten.

10. System nach einem der Ansprüche 1 bis 9, **dadurch gekennzeichnet, dass** im Bereich des Auslasses des Portionspackungshalters (1) eine Cremadüse (7) angeordnet ist.

11. System nach einem der Ansprüche 1 bis 10, **dadurch gekennzeichnet, dass** die Brühmaschine (50) eine Anlagefläche (54) aufweist, relativ zu der der Portionspackungshalter (1) mittels der Führungseinrichtung (58) bewegbar ist und von der das Aufstechmittel (52) nach unten vorsteht.

12. System nach Anspruch 11, **dadurch gekennzeichnet, dass** im Bereich der Anlagefläche (54) eine umlaufende Dichtung (56) vorgesehen ist, die bei eingesetztem Portionspackungshalter (1) an einen Randbereich des Portionspackungshalters (1) anlegbar ist.

13. System nach einem der Ansprüche 1 bis 12, **dadurch gekennzeichnet, dass** die Steuerung zum Bereitstellen von drei Drücken für das Druckwasser eingerichtet ist, die zum Brühen von Espresso, Caffe Crema sowie Filterkaffee vorgesehen sind.

14. System nach Anspruch 13, **dadurch gekennzeichnet, dass** die drei Drücke im Bereich von 8 bis 18 bar, 4 bis 10 bar bzw. 1 bis 4 bar liegen.

15. System nach Anspruch 2 und nach einem der Ansprüche 2 bis 14, **dadurch gekennzeichnet, dass** die Getränkesubstanz in der Portionspackung (40) eine Kaffeesubstanz aufweist, die zum Brühen von Espresso oder Caffè Crema oder Filterkaffee vorgesehen ist, und dass optional weitere Substanzen in der Portionspackung (40) enthalten sind.

16. System nach Anspruch 2 und nach einem der Ansprüche 2 bis 15, **dadurch gekennzeichnet, dass** die Getränkesubstanz in der Portionspackung (40) mindestens eine der folgenden Substanzen aufweist: Tee, Schokolade, Instantsuppe, Milchpulver, Zucker.

## Claims

1. A system with
- a brewing machine (50),
which is set up for brewing a beverage, especially a hot coffee beverage, by means of a single-serving package (40), which contains a particulate beverage substance extractable by means of water,
which comprises a pressurised-water device, a guide device (58) for a single-serving package holder (1) and a control unit,
wherein the control unit is set up to provide at least three different pressures for the pressurised water, and wherein a single-serving package holder (1) inserted into the guide device (58) can be moved upwards by means of the guide device (58) onto a piercing means (52), and
- a single-serving package holder (1),
which can be inserted into the guide device (58),
which comprises a receptacle (3) into which at least one single-serving package (40) can be placed, and
which comprises an outlet (24, 26, 32) below the receptacle (3), through which brewed beverage can leave the single-serving package holder (1) after water released from the pressurised-water device has passed through a single-serving package (40) placed in the single-serving package holder (1),
- **characterised by**
a protective device (8), which is set up in order to protect a single-serving package (40) placed into the receptacle (3) from the piercing means (52),
wherein the protective device is either formed by the depth of the receptacle, and the depth of the receptacle is dimensioned in such a manner that a single-serving package (40) placed into the receptacle does not reach up to the piercing means (52) during a brewing process even in an inflated condition,
or comprises a cover (8) provided with at least one water through-passage (36), which is set up in order to cover at the top a single-serving package (40) placed into the receptacle (3) of the single-serving package holder (1).

2. The system according to claim 1,
**characterised by**
a single-serving package (40), which contains a particulate beverage substance extractable by means of water, preferably a coffee substance, wherein the beverage substance is surrounded on all sides by a filter material, preferably by a filter paper, and wherein the single-serving package (40) can be placed into the receptacle (3) of the single-serving package holder (1).

3. The system according to claim 1 or 2,
**characterised in that**
the protective device comprises the cover (8) provided with at least one water through-passage (36), and the cover (8) bulges downwards.

4. The system according to any one of claims 1 to 3,
**characterised in that**
the protective device comprises the cover (8) provided with at least one water through-passage (36), and the cover is designed as a separate lid (8), which can be placed onto the receptacle (3) from above when the single-serving package holder (1) has been taken out of the guide device (58).

5. The system according to claim 4,
**characterised in that**
the receptacle (3) is surrounded by a supporting edge (14), onto which the lid (8) can be placed in an edge region.

6. The system according to claim 5,
**characterised in that**
a gasket (16) is provided between the supporting edge (14) and the edge region of the lid (8).

7. The system according to any one of claims 1 to 6,
**characterised in that**
the protective device comprises the cover (8) provided with at least one water through-passage (36), and the cover (8) provides several water through-passages (36), the arrangement of which is set up for a uniform distribution of water to a single-serving package (40) disposed beneath the cover (8).

8. The system according to any one of claims 1 to 7,
**characterised in that**
the protective device comprises the cover (8) provided with at least one water through-passage (36), and the lower region of the receptacle (3) is provided with filter openings (22) which are preferably arranged in a removable filter insert (6).

9. The system according to claim 7 and claim 8,
**characterised in that**
the water through-passages (36) and the filter openings (22) are set up to hold back ground coffee filled directly into the receptacle (3).

10. The system according to any one of claims 1 to 9,
**characterised in that**
a cream nozzle (7) is arranged in the region of the outlet of the single-serving package holder (1).

11. The system according to any one of claims 1 to 10,
**characterised in that**
the brewing machine (50) provides an abutting surface (54), relative to which the single-serving package holder (1) can be moved by means of the guide device (58), and from which the piercing means (52) projects downwards.

12. The system according to claim 11,
**characterised in that**
a peripheral gasket (56) is provided in the region of the abutting surface (54), which, with an inserted single-serving package holder (1), can be placed at an edge region of the single-serving package holder (1).

13. The system according to any one of claims 1 to 12,
**characterised in that**
the control unit is set up to provide three pressures for the pressurised water, which are provided for brewing espresso, café crème and filter coffee.

14. The system according to claim 13,
**characterised in that**
the three pressures are disposed within the range from 8 to 18 bar, 4 to 10 bar and respectively 1 to 4 bar.

15. The system according to claim 2 and according to any one of claims 2 to 14,
**characterised in that**
the beverage substance in the single-serving package (40) comprises a coffee substance, which is provided for brewing espresso or café crème or filter coffee, and that further substances are optionally contained in the single-serving package (40).

16. The system according to claim 2 and according to any one of claims 2 to 15,
**characterised in that**
the beverage substance in the single-serving package (40) comprises at least one of the following substances: tea, chocolate, instant soup, milk powder, sugar.

## Revendications

1. Système, comprenant :
- une machine d'infusion (50),
qui est aménagée pour infuser une boisson, en particulier une boisson chaude à base de café, au moyen d'une dosette (40), qui contient une substance particulaire pour boisson pouvant être extraite à l'eau,
qui présente un dispositif d'eau sous pression, un dispositif de guidage (58) pour un support de dosette (1) et une commande,
dans lequel la commande est configurée pour fournir au moins trois pressions différentes pour l'eau sous pression, et
dans lequel un support de dosette (1) placé dans le dispositif de guidage (58) peut être déplacé au moyen du dispositif de guidage (58) vers le haut sur un moyen de perçage (52), et
- un support de dosette (1),
qui peut être placé dans le dispositif de guidage (58),
qui présente un logement (3) dans lequel peut être insérée au moins une dosette (40), et
qui, en dessous du logement (3), présente une sortie (24, 26, 32), par laquelle la boisson infusée peut quitter le support de dosette (1), après que de l'eau délivrée par le dispositif d'eau sous pression a traversé une dosette (1) insérée dans le support de dosette (1),
- **caractérisé par**
un dispositif de protection (8) qui est aménagé pour protéger une dosette (40) insérée dans le logement (3) à l'égard du moyen de perçage (52),
dans lequel le dispositif de protection
est soit formé par la profondeur du logement et la profondeur du logement est dimensionnée de sorte qu'une dosette (40) insérée dans le logement n'atteigne pas le moyen de perçage (52) pendant une opération d'infusion, même à l'état gonflé,
soit présente un élément de couverture (8) doté d'au moins une ouverture de passage d'eau (36), qui est aménagé pour recouvrir par le haut une dosette (40) insérée dans le logement (3) du support de dosette (1).

2. Système selon la revendication 1, **caractérisé par** une dosette (40), qui contient une substance particulaire pour boisson, pouvant être extraite à l'eau, de préférence une substance à base de café, dans lequel la substance pour boisson est entourée de tous côtés par un matériau filtrant, de préférence par un papier-filtre, et dans lequel la dosette (40) peut être insérée dans le logement (3) du support de dosette (1).

3. Système selon la revendication 1 ou 2, **caractérisé en ce que** le dispositif de protection présente l'élément de couverture (8) doté d'au moins une ouverture de passage d'eau (36) et **en ce que** l'élément de couverture (8) est bombé vers le bas.

4. Système selon l'une quelconque des revendications 1 à 3, **caractérisé en ce que** le dispositif de protection présente l'élément de couverture (8) doté d'au moins une ouverture de passage d'eau (36) et **en ce que** l'élément de couverture est conçu comme un couvercle (8) séparé qui peut être posé par le haut sur le logement (3) lorsque le support de dosette (1) est retiré du dispositif de guidage (58).

5. Système selon la revendication 4, **caractérisé en ce que** le logement (3) est entouré par un bord d'appui (14), sur lequel le couvercle (8) peut être appliqué dans une zone de bord.

6. Système selon la revendication 5, **caractérisé en ce que**, entre le bord d'appui (14) et la zone de bord du couvercle (8), on prévoit un joint étanche (16).

7. Système selon l'une quelconque des revendications 1 à 6, **caractérisé en ce que** le dispositif de protection présente l'élément de couverture (8) doté d'au moins une ouverture de passage d'eau (36) et **en ce que** l'élément de couverture (8) présente plusieurs ouvertures de passage d'eau (36), dont l'agencement est prévu pour une distribution d'eau homogène vers une dosette (40) se trouvant en dessous de l'élément de couverture (8).

8. Système selon l'une quelconque des revendications 1 à 7, **caractérisé en ce que** le dispositif de protection présente le recouvrement (8) doté d'au moins une ouverture de passage d'eau (36) et **en ce que** la zone inférieure du logement (3) est pourvue d'ouvertures de tamisage (22), qui sont ménagées de préférence dans un élément de tamisage rapporté (6) qui peut être retiré.

9. Système selon les revendications 7 et 8, **caractérisé en ce que** les ouvertures de passage d'eau (36) et les ouvertures de tamisage (22) sont configurées pour retenir du café moulu versé directement dans le logement (3).

10. Système selon l'une quelconque des revendications 1 à 9, **caractérisé en ce qu'**une buse à crème (7) est agencée dans la zone de la sortie du support de dosette (1).

11. Système selon l'une quelconque des revendications 1 à 10, **caractérisé en ce que** la machine d'infusion (50) présente une face d'appui (54), par rapport à laquelle le support de dosette (1) peut être déplacé au moyen du dispositif de guidage (58) et à partir de laquelle le moyen de perçage (52) fait saillie vers le bas.

12. Système selon la revendication 11, **caractérisé en ce que** dans la zone de la surface d'appui (54), on prévoit un joint étanche (56) périphérique qui peut être appliqué sur une zone de bord du support de dosette (1) lorsque le support de dosette (1) est inséré.

13. Système selon l'une quelconque des revendications 1 à 12, **caractérisé en ce que** la commande est configurée pour fournir trois pressions pour l'eau sous pression, qui sont prévues pour infuser un expresso, un café crème et un café filtre.

14. Système selon la revendication 13, **caractérisé en ce que** les trois pressions se situent dans la plage de 8 à 18 bars, 4 à 10 bars et 1 à 4 bars.

15. Système selon la revendication 2 et selon l'une quelconque des revendications 2 à 14, **caractérisé en ce que** la substance pour boisson dans la dosette (40) comporte une substance à base de café, qui est prévue pour infuser un expresso, un café crème ou un café filtre, et **en ce que** d'autres substances sont éventuellement contenues dans la dosette (40).

16. Système selon la revendication 2 et selon l'une quelconque des revendications 2 à 15, **caractérisé en ce que** la substance pour boisson dans la dosette (40) comporte au moins une des substances suivantes : thé, chocolat, soupe instantanée, lait en poudre, sucre.
